(19) Europäisches Patentamt
European Patent Office
Office européen des brevets

(11) **EP 1 855 293 A1**

(12) **EUROPEAN PATENT APPLICATION**
published in accordance with Art. 158(3) EPC

(43) Date of publication:
**14.11.2007 Bulletin 2007/46**

(51) Int Cl.:
***H01B 17/58*** *(2006.01)*   ***H02G 3/04*** *(2006.01)*
***B32B 1/08*** *(2006.01)*   ***F16L 59/08*** *(2006.01)*
***F16L 11/02*** *(2006.01)*

(21) Application number: **04805080.1**

(22) Date of filing: **02.12.2004**

(86) International application number:
**PCT/ES2004/000537**

(87) International publication number:
**WO 2006/061441 (15.06.2006 Gazette 2006/24)**

(71) Applicant: **RELATS, S.A.**
**08140 Caldes de Montbui (ES)**

(72) Inventors:
• **RELATS, Jordi**
**E-08140 Caldes De Montbui (Barcelona) (ES)**
• **RELATS, Pere**
**E-08140 Caldes De Montbui (Barcelona) (ES)**

• **ARTOLA, Dolors**
**E-08140 Caldes De Montbui (Barcelona) (ES)**
• **FRUNS, Anna**
**E-08140 Caldes De Montbui (Barcelona) (ES)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(54) **OPEN PROTECTIVE TUBE**

(57)   The invention refers to an open protective tube, especially for the mechanical and thermal protection of electrical conducts and other components in automobiles.

The open protective tube comprising a first layer (1) with a plurality of plastic threads which are woven to one another and a second layer of aluminium foil (2), and is **characterised in that** the said aluminium foil (2) comprises a plastic material film (3) and an aluminium film (4), said plastic material film (3) being welded to the stated first layer (1).

Fig.1

Printed by Jouve, 75001 PARIS (FR)

EP 1 855 293 A1

**Description**

Background to the Invention

At the present time protection tubes are used to protect electrical conductors and other components, especially in the automobile industry.

These protection tubes must combine different characteristics that make them suitable for these types of uses.

In the first place, the protection tubes must have great mechanical and thermal resistance, as they are used in areas of high temperature and where they are subjected to abrasion.

In addition, these protection tubes must include noise insulation characteristics, as it would be unacceptable for these protection tubes to produce noise when used in automobiles.

In addition, these protective tubes must be easy to install.

In order to solve these disadvantages there are a great number of protection tubes that combine these characteristics and which are currently used to protect cables in automobiles.

One of the most important characteristics that these protection tubes must have is resistance to high temperatures. At the present time there are protective tubes formed by a series of layers, for example a first layer formed by a plurality of a plastic material or mineral threads knitted to one another and a second layer of aluminium film on said first layer. These protection tubes are used to achieve good electromagnetic and thermal insulation.

In this case, the fixing of the layer of aluminium film to the second layer with adhesive is currently known. These types of protective tube have the disadvantage that they cannot stand high temperatures due to the fact that the adhesives do not withstand high temperatures with the lack of suitable adherence between the aluminium film and the first previously stated layer.

Description of the Invention

With the open protection tube of the invention the stated disadvantages are resolved, presenting other advantages which will be described.

The open protective tube of the invention has a first layer comprising a plurality of plastic threads which are woven to one another and a second layer of aluminium foil, and is characterised in that the said aluminium foil comprises a plastic material film and an aluminium film, said plastic material film being welded to the stated first layer.

The protective tube is open along its length making the assembly significantly easier.

According to the preferred embodiment, said plastic material comprises polyester.

According to alternative embodiments, the threads that comprise the first layer are made from polyester or polyester and polyamide.

If required, the aluminium film can be located on the inner part of the tube.

With the protective tube of this present invention excellent electromagnetic and thermal insulation is achieved, supporting high temperatures, and excellent adherence between the first and second layers and with great ease in assembly.

A Brief description of the Drawings

In order to give a greater understanding of that which has been stated some drawings are included in which an outline of a practical embodiment is made which is made by way of being an example and without being by way of limitation.

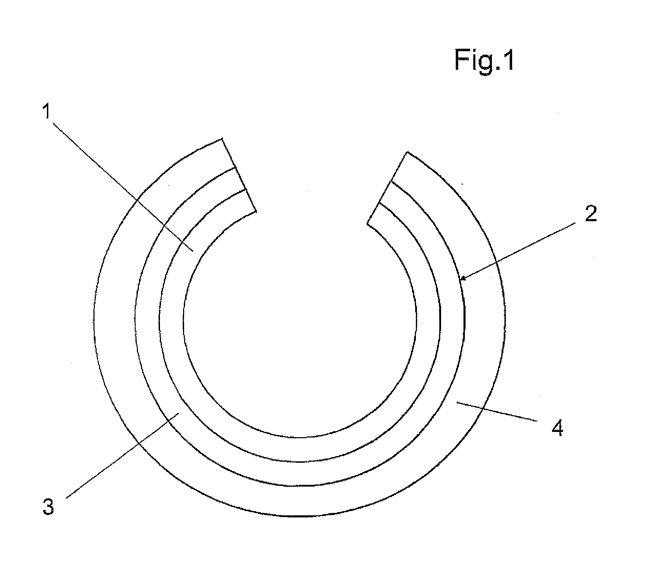

Figure 1 shows a transverse section view of the protective tube of the invention;

Figure 2 is a graph in which the results of the trials are shown in order to demonstrate the electromagnetic insulation of the protective tube of this present invention.

Description of a preferred embodiment

As and how can be seen in the only figure, the protective tube of the invention is made up of two layers:

- A first layer (1) comprising of a plurality of polyester or polyester and polyamide threads that are woven to each other; and
- A second layer of aluminium foil (2) over said first layer (1).

The aluminium foil layer (2) is made from a polyester film (3) and an aluminium film (4), said polyester film (3) being welded to said first layer (1). For example, the thickness of the polyester layer (3) can be 23 microns and the thickness of the aluminium foil (4) can be from 9 to 25 microns, with a total weight for the aluminium layer (2) being 2.6 g/m.

The welding of the aluminium foil layer (2) on the first layer (1) is by preference made at a temperature of between 240° C and 540° C said welding being carried out with a continuous process at a speed of between 1 and 20 m/min.

Said first layer (1) has, for example, has a weight of 17.26 g/m and a thickness of 1.0 mm $\pm$ 0.3 mm for a width of 50 mm.

For example the tube of this present invention, can have a weight of 19.86 g/m and a thickness of 1.0 mm $\pm$ 0.3 mm for a diameter of 7 mm.

The order of the layers can be inverted placing the aluminium on the inside and the woven layer on the outside.

As has been previously stated, with the protective tube of the present invention excellent electromagnetic and thermal insulation is achieved, even at high temperatures.

In order to demonstrate this statement several trials have been carried out on the protective tube of this present invention.

In order to assess the electromagnetic insulation of the protective tube of the present invention a spectrum analyser (Agilent E-4402B) was used with an internal radiofrequency generator.

A two-metre long wire, connected to the generator acted as the electromagnetic wave transmitter. A screened coaxial cable, parallel to the wire separated by some 2 cm, and with a length of 15 cm without screening, acted as the aerial, and was connected to the spectrum analyser.

First, a measurement of the power received is carried out. After the 15 cm aerial is screened with the trial tube (sample) and the power received is again measured. The difference between both powers is a screening measurement of the sample.

It must be taken into account that the majority of measurements are of minimum screening, and that the real screening is always greater than that of the graphs. This is a consequence of the fact that the measurement with the screened aerial almost always gives a zero power received.

If the power transmitted were higher, or the sensitivity of the spectrum analyser were greater, measurements could be carried out in which the power received with the screening were different to zero, and therefore, maximum screening values will be the result.

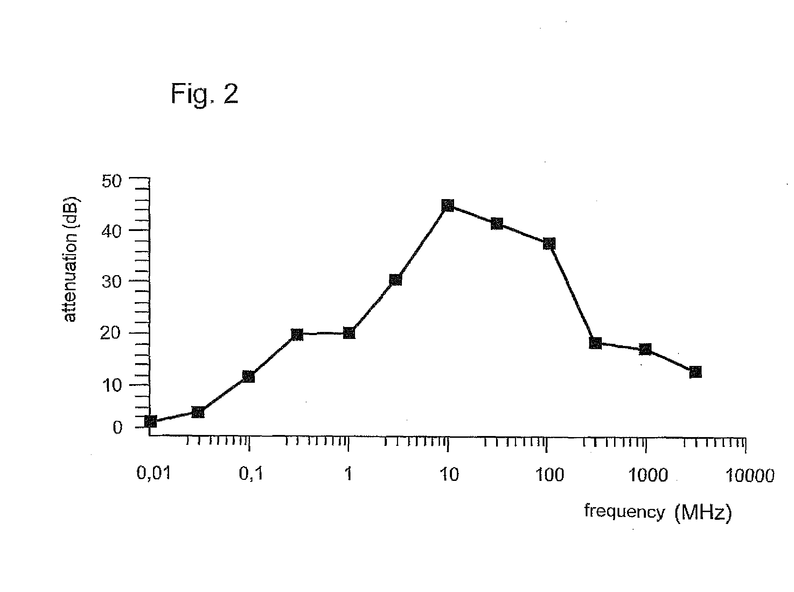

The results of the trial are shown in the graph in figure 2.

In order to check the characteristics of the thermal insulation a trial was carried out. The main objective of this trial was to study the performance of the protection tube under an external heat source.

In this case, it is very important to control the ambient temperature whilst the trial is being carried out in order to obtain reliable performance. Depending on the ambient temperature, the thermal insulation results can change.

The trial was carried out in accordance with the BUNDY SA 01-006 R4 standard, under the following conditions:

Radiant heat source: 400° C
Distance: 35 mm under the heat source
Dimensions of the heat box: 420 mm x 420 mm x 245 mm
Duration of the trial: 1 hour
Description of the thermocouples:

- Internal thermocouple: Position of the thermocouple touching the external surface of the ceramic cylinder, at the middle point of the length (15 cm) and measuring the temperature on the inside of the protective tube.
- Ambient thermocouple: A thermocouple for the measurement of the ambient temperature in the heat box.

During the trial all of the temperatures were recorded.

Delta T is calculated as the difference between the T of the transmitter and the T on the inside of the tube:

$$\texttt{Delta T = transmitter T - internal T}$$

The results of the trial are shown in the attached Table I.

Table I

| Time (min) | transmitter T (°C) | internal T (°C) | ambient T | Delta T (°C) |
|---|---|---|---|---|
| 0 | 23 | 23 | 24 | 0 |

(continued)

| Time (min) | transmitter T (°C) | internal T (°C) | ambient T | Delta T (°C) |
|---|---|---|---|---|
| 2 | 129 | 64 | 78 | 65 |
| 4 | 264 | 81 | 96 | 183 |
| 6 | 291 | 77 | 87 | 214 |
| 8 | 316 | 83 | 93 | 233 |
| 10 | 329 | 87 | 98 | 242 |
| 15 | 363 | 98 | 109 | 265 |
| 20 | 384 | 105 | 119 | 279 |
| 25 | 394 | 107 | 128 | 287 |
| 30 | 396 | 109 | 130 | 287 |
| 35 | 398 | 110 | 135 | 288 |
| 40 | 400 | 109 | 139 | 291 |
| 50 | 400 | 116 | 143 | 284 |
| 60 | 400 | 118 | 152 | 282 |

In spite of the fact that reference has been made to a specific embodiment of the invention, it is clear for an expert in the subject matter that the protection tube described is capable of being used with numerous variations and modifications, and all of the details mentioned can be substituted for others that are technically equivalent, without departing from the scope of the protection defined by the attached claims.

## Claims

1.  Open protective tube comprising a first layer (1) with a plurality of plastic threads which are woven to one another and a second layer of aluminium foil (2), and is **characterised in that** the said aluminium foil (2) comprises a plastic material film (3) and an aluminium film (4), said plastic material film (3) being welded to the stated first layer (1).

2.  Protective tube according to Claim 1, **characterised in that** said plastic material film (3) is made from polyester.

3.  Protective tube according to with Claim 1, **characterised in that** the threads that comprise said first layer (1) are made from polyester.

4.  Protective tube according to with Claim 1, **characterised in that** the threads that comprise said first layer (1) are made from polyester and polyamide.

5.  Protective tube according to Claim 1, **characterised in that** the aluminium foil (4) is located on the inside of the tube.

Fig.1

EP 1 855 293 A1

Fig. 2

<div style="text-align:center">**INTERNATIONAL SEARCH REPORT**</div>

| | International application No. |
|---|---|
| | PCT/ ES 2004/000537 |

| A. CLASSIFICATION OF SUBJECT MATTER |
|---|
| **see additional sheet** |
| According to International Patent Classification (IPC) or to both national classification and IPC |

| B. FIELDS SEARCHED |
|---|
| Minimum documentation searched (classification system followed by classification symbols) |
| H01B, H02G, B32B, F16L |
| Documentation searched other than minimum documentation to the extent that such documents are included in the fields searched |
| Electronic data base consulted during the international search (name of data base and, where practicable, search terms used) |
| CIBEPAT,EPODOC, WPI |

**C. DOCUMENTS CONSIDERED TO BE RELEVANT**

| Category* | Citation of document, with indication, where appropriate, of the relevant passages | Relevant to claim No. |
|---|---|---|
| A | DE 19742223 A (UNIV. DRESDEN TECH.) 01.04.1999, **column 2, line 66 - column 3, line 35.** | 1-5 |
| A | US 4327248 A (CAMPBELL, L.J. et al.) 27.04.1982, **column 2, line 31 - colum 3, line 55.** | 1-5 |
| A | US 5329064 A (TASH, T.G. et al.) 12.07.1994., **column 2, lines 21-37.** | 1-5 |
| A | US 6433273 B ( KENYON, D.M. et al.) 13.08.2002, **column 2, lines 10-50.** | 1-5 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| (11.02.2005) | (18.03.2005) |

| Name and mailing address of the ISA/ | Authorized officer |
|---|---|
| **S.P.T.O.** | |
| Facsimile No. | Telephone No. |

Form PCT/ISA/210 (second sheet) (July 1992)

**INTERNATIONAL SEARCH REPORT**

| International application No. |
| --- |
| PCT/ ES 2004/000537 |

*H01B17/58(2006.01)*
*H02G3/04(2006.01)*
*B32B1/08(2006.01)*
*F16L59/08(2006.01)*
*F16L11/02(2006.01)*
*(2006.01)*

Form PCT/ISA/210

**INTERNATIONAL SEARCH REPORT**
Information on patent family members

International Application No

PCT/ ES 2004/000537

| Patent document cited in search report | Publication date | Patent familiy member(s) | Publication date |
|---|---|---|---|
| DE19742223 A 1 C 2 | 01.04.1999 | NONE | ----------- |
| US 4327248 A | 27.04.1982 | AU 7571281 A<br>EP 0051139 A2<br>EP 19810107353<br>JP 57107510 A<br>ZA 8106512 A<br>CA 1175510 A1<br>AU 540943 B2<br>DE 3173768 D | 22.04.1982<br>12.05.1982<br>17.09.1981<br>05.07.1982<br>29.09.1982<br>02.10.1984<br>06.12.1984<br>27.03.1986 |
| US5329064 A | 12.07.1994 | NONE | ----------- |
| US6433273 B 1 | 13.08.2002 | NONE | ----------- |

Form PCT/ISA/210 (patent family annex) (July 1992)